# EUROPÄISCHE PATENTSCHRIFT

(11) **EP 2 467 920 B1**
(45) Veröffentlichungstag und Bekanntmachung des Hinweises auf die Patenterteilung: **14.09.2016**
(21) Anmeldenummer: 10778832.5
(22) Anmeldetag: 11.08.2010
(51) Int. Cl.: H02J 3/38

(54) **LEISTUNGSREGELUNG FÜR SOLARKRAFTWERK**
POWER REGULATION FOR SOLAR POWER STATION
RÉGULATION DE PUISSANCE D'UNE CENTRALE ÉLECTRIQUE SOLAIRE

(30) Priorität: 19.08.2009 DE 102009038024; 03.06.2010 DE 102010023113
(43) Veröffentlichungstag der Anmeldung: 27.06.2012
(73) Patentinhaber: skytron energy GmbH, 10245 Berlin (DE)
(72) Erfinder: GALLER, Stefan, 12161 Berlin (DE); Heiligenstadt, Jens, 15711 Königs Wusterhausen OT Zeesen (DE)
(74) Vertreter: Lange, Sven
(86) Internationale Anmeldenummer: PCT/DE2010/000966
(87) Internationale Veröffentlichungsnummer: WO 2011/020466

(56) Entgegenhaltungen:
- EP-A2- 1 783 365
- DE-A1-102004 048 341
- US-A1- 2008 212 343
- BRAUNER G: "NETZANBINDUNG VON WINDKRAFTANLAGEN", ELEKTROTECHNIK UND INFORMATIONSTECHNIK, SPRINGER VERLAG, WIEN, AT, vol. 116, no. 7/08, 1 January 1999 (1999-01-01), pages 428-432, XP000926851, ISSN: 0932-383X

## Beschreibung

Die Erfindung umfasst Kraftwerksüberwachungs- und -regelungskonzepte, die die Weiterentwicklung der Anforderungen an den Betrieb von photovoltaischen Energieerzeugungsanlagen berücksichtigt.

Der Ausbau der erneuerbaren Energien führt zu neuen Anforderungen an die Verfügbarkeit und die Betriebssicherheit der Energieversorgungsnetze, denn zu den zeitlichen Schwankungen des Energiebedarfs kommt nun das schwankende und schwer vorherzusagende Erzeugungsangebot.

Um ein hochverfügbares und stabiles Versorgungsnetz auch für die Zukunft sicherzustellen, wurden mit der EEG Novelle (Oktober 2008) und der Mittelspannungsrichtlinie des BDEW (Januar 2009) vom Gesetzgeber und vom Verbund der Energienetzbetreiber die rechtlichen und technischen Grundlagen geschaffen, um regenerative Energieerzeugungsanlagen mit mehr als 100 kWp in die bestehenden Versorgungsnetze als steuerbare Kraftwerke einzubinden.

Damit entstehen neue Anforderungen an die Planung, die Systemtechnik und den Betrieb von PV-Kraftwerken. Insbesondere eine sichere Prozessleittechnik und ein intelligentes Kraftwerksmanagement spielen bei der effizienten und kostenverträglichen Umsetzung eine große Rolle.

Bisher haben sich die Netzbetreiber nicht auf einheitliche, detaillierte Anforderungen an das Netzsicherheitsmanagement, die Kraftwerksregelung, die Schutzfunktionen sowie die verwendeten Prozessleitschnittstellen festlegen können. Dies resultiert momentan in sehr unterschiedliche Anforderungen je nach Spannungsebene des Netzverknüpfungspunktes und nach zuständigem Netzbetreiber. Eine Konsultation mit dem zuständigen Netzbetreiber zu den gestellten Anforderungen zur Teilnahme am Netzsicherheitsmanagement ist daher parallel zur Beantragung eines Anschlusses zu empfehlen.

Grundsätzlich ist für Anlagen über 100 kW Nennleistung die Teilnahme am Netzsicherheitsmanagement vorgeschrieben. Dabei kann vom Netzbetreiber durch Vorgabe einer Leistungsstufe die Wirkleistungseinspeisung des PV-Kraftwerkes auf einen bestimmten Prozentsatz der Kraftwerksnennleistung (momentan 100%, 60%, 30%, 0%) begrenzt werden. Dies erfolgt durch eine vom Netzbetreiber vorgegebene Prozessleitschnittstelle, an welche die Kraftwerksregelung angeschlossen ist. Die erfolgreiche Umsetzung dieser Vorgabe ist dem Netzbetreiber mittels der Prozessleitschnittstelle gegebenenfalls mitzuteilen.

Bisher wird im Stand der Technik die Leistungsreduktion als reine Steuerung ausgeführt. Das heißt, ein vom Energieversorger kommender Stellbefehl wird direkt an alle im Kraftwerk vorhandenen Wechselrichter gesandt und alle auf prozentual den gleichen Wert gedrosselt. Dies führt durch Verluste bei der kraftwerks-internen Energieweiterleitung sowie durch eventuelle Nichtverfügbarkeit von Wechselrichtern (beispielsweise abgeschaltete Einheiten in der Instandsetzung) zu Ertragsverlusten über die geforderte Drosselung hinaus.

EP 1 783 365 A2 offenbart ein Verfahren zur Steuerung einer Windenergieanlage bei dem die Übertragung von Steuerdaten anhand von Identifikationsdaten überprüft wird und bei dem zulässige Steuerdaten zur Betriebsführung eingesetzt werden.

US 2008/212343 A1 offenbart eine Mikroenergiequelle mit einem Inverter, einem Energiespeicher und einer Steuerung. Basierend auf Leistungswerten werden verschiedene Frequenzwerte für den Inverter berechnet, um schließlich die Frequenz der Ausgangsleistung des Inverters zu bestimmen.

Es ist Aufgabe der Erfindung ein System bereitzustellen, welches nicht die Nachteile des Stands der Technik aufweist.

Diese Aufgabe wird mit den Merkmalen der Ansprüche 1, 9 beziehungsweise 12 gelöst. Vorteilhafte Ausführungsformen der Erfindung sind in den abhängigen Ansprüchen definiert.

Gemäß einem ersten Aspekt umfasst die Erfindung eine Kraftwerksregelung nach Anspruch 1.

Regelgrößen der Regelung können die Wirkleistung, die Blindleistung, der Verschiebungsfaktor, der Leistungsfaktor, die Netzfrequenz und/oder die Netzspannung sein.

Die Regelung kann zusätzlich Messwerte der Energieerzeugungseinheiten verarbeiten.

Das System zur dynamischen Regelung kann ein oder mehrere Interfaceeinheiten für unterschiedliche Typen von Energieerzeugungseinheiten umfassen.

Passive Elemente der Energieerzeugungsanlage können bei der Regelung berücksichtigt sein.

Das System zur dynamischen Regelung kann einen Signalausgang zur Rückmeldung von Informationen an ein übergeordnetes System, wie zum Beispiel eine Netzleitstelle oder ein Steuerrechner eines Kraftwerks, umfassen. So kann die Regelung auch auf die übergeordnete Ebene ausgeweitet werden.

Der Soll-Wert kann von einem übergeordneten System, wie zum Beispiel eine Netzleitstelle oder ein Steuerrechner eines Kraftwerks, empfangen werden.

Die Regelung kann einen PID-Regler aufweisen, der sich einfach und robust realisieren lässt. Andere klassische Regler oder weitere Regler wie zum Beispiel neuronale Netze können zum Einsatz kommen.

Gemäß einem weiteren Aspekt der Erfindung umfasst eine regenerative Energieerzeugungsanlage mit mehreren Energieerzeugungseinheiten eine Kraftwerksregelung nach Anspruch 1. Die Verknüpfung von regenerativer Energieerzeugungsanlage und System zur dynamischen Regelung der Energieerzeugungsanlage hat den Vorteil, dass keine oder nur geringe Maßnahmen hinsichtlich Protokollen und/oder Schnittstellen erforderlich sind.

Die Energieerzeugungseinheit kann zum Beispiel ein Wechselrichter, Gleichsteller oder Inverter sein.

Die regenerative Energieerzeugungsanlage kann eine photovoltaische Energieerzeugungsanlage umfassen. Photovoltaische Energieerzeugungsanlagen haben eine zuweilen stark schwankende Ausgangsleistung, was sie für die Erfindung prädestiniert.

Gemäß einem weiteren Aspekt der Erfindung umfasst ein Verfahren zur Regelung einer regenerativen Energieerzeugungsanlage nach Anspruch 11.

Der Soll-Wert kann von einem übergeordneten System, wie zum Beispiel eine Netzleitstelle oder ein Steuerrechner eines Kraftwerks, empfangen werden.

Informationen können an ein übergeordnetes System, wie zum Beispiel eine Netzleitstelle oder ein Steuerrechner eines Kraftwerks, gesendet werden. So kann die Regelung auch auf die übergeordnete Ebene ausgeweitet werden.

Weitere Messwerte aus der Energieerzeugungsanlage und/oder externe Messwerte können verarbeitet werden, um die Steuerung noch intelligenter zu machen, das heißt noch besser an die jeweilige Situation anpassbar zu machen.

Die Erfindung erweitert das Angebot an PV-Systemtechnik vom umfassenden, herstellerunabhängigen Monitoring großer PV-Kraftwerke bis hin zur kompletten Leitwartenfunktionalität um intelligente Konzepte der Kraftwerksregelung.

Die Konzepte unterstützen und verbessern die Kraftwerke mit einem Monitoring. Zentral geht es um die Leistungsreduktion auf Anfrage des Energieversorgers. Eine Regelung durch Messung der tatsächlichen Ausgangsleistung des Kraftwerkes sowie Vergleich mit der Vorgabe und eine entsprechende Nachführung der Wechselrichteransteuerung in einer geschlossenen Regelungskette kann diese Ertragsverluste vermeiden.

Dieses Konzept der geschlossenen Regelung kann durch die Nutzung der vom Monitoring gewonnenen Daten noch verbessert werden. Dazu wird die aktuelle Verfügbarkeit und Auslastung aller Anlagenteile in die Berechnung der Regelung eingebunden und somit die zu reduzierende Leistung auf einzelne Wechselrichter verteilt. Das hilft zum einen die Regelung aus jedem Zustand des Kraftwerkes hinaus möglichst schnell und effizient durchzuführen. Zum anderen können dadurch auch Wechselrichter unterschiedlicher Nennleistung und sogar unterschiedlicher Hersteller in einem Kraftwerk in das Leistungsmanagement eingebunden werden sowie die Belastung (bzw. Entlastung durch die Reduktion) dynamisch verteilt werden.

Auch auf die Regelung von elektrischen Parametern am Netzverknüpfungspunkt (wie der Verschiebungsfaktor cos-phi, die Netzfrequenz oder die Netzspannung) lässt sich dieses Konzept ausdehnen. Besonders die Kompensation von Blindleistung würde durch eine differenzierte, auf jeden Wechselrichter ausgelegte Regelung Vorteile in der Wirkleistungsausbeute und der Lastverteilung im Kraftwerk ergeben.

Zusätzliche, mögliche Anforderungen an einzelne PV-Kraftwerke, welche von der erfindungsgemäßen Steuerung bedient werden können, können aus folgenden Punkten bestehen, erschöpfen sich jedoch nicht in dieser Aufstellung:
- Stabilisierung des Verschiebungsfaktor (cos ϕ) auf einen festen, vorgegebenen Wert am Netzverknüpfungspunkt;
- Stabilisierung des Verschiebungsfaktor (cos ϕ) auf einen variablen, vom Netzbetreiber über eine Prozessleitschnittstelle vorgegebenen Wert am Netzverknüpfungspunkt;
- Nachregelung des Verschiebungsfaktor (cos ϕ) in Abhängigkeit von der eingespeisten Wirkleistung oder bestehender Netzspannung nach einer vorgegeben Kurve mit einer vorgegeben Geschwindigkeit;
- Bereitstellung von Kurzschlussstrom (Fault Ride Through);
- Wirkleistungsreduktion bis zur Abschaltung bei Über- und Unterfrequenz nach einem vorgegebenen Schema;
- Trennung der Erzeugungsanlage bei Unter- oder Überspannung nach einem vorgegebenen Spannungs-Zeit-Schema;
- Übermittlung der Ist-Werte an den Netzbetreiber über eine vorgegebene Prozessleitschnittstelle.

Die Erfindung deckt die folgenden Punkte ab:
- Hard- und Software für die Prozessleittechnik mit Schnittstellen zu:
   o Messwandlern im Kraftwerk und am Netzverknüpfungspunkt
   o Funk-Rundsteuerempfänger und Prozessleitschnittstellen vom Netzbetreiber
   o Wechselrichter unterschiedlicher Hersteller;
- Wirkleistungsbegrenzung nach Vorgabe des Netzbetreibers auf eine vorgegebene Begrenzungsstufe innerhalb einer vorgegeben Zeit (Standard: eine Minute);
- langsames, kontrolliertes Anfahren von gedrosselten Kraftwerken nach Aufhebung der Wirkleistungsbegrenzung durch den Netzbetreiber;
- Blindleistungsregelung am Netzverknüpfungspunkt auf einen vorgegeben, statischen oder variablen Verschiebungsfaktor (cos ϕ);
- Blindleistungsregelung am Netzverknüpfungspunkt auf einen vorgegeben, von der Wirkleistung oder Netzspannung abhängigen Verschiebungsfaktor (cos ϕ);
- Blindleistungskompensation von passiven Blindwiderständen in der Energieverteilung des Kraftwerkes (z.B. lange Erdkabeltrassen zu einem Übergabeumspannwerk) ab einem eingespeisten Wirkleistungsminimum;
- Netzfrequenzabhängige Wirkleistungsreduktion bei Abweichungen der Netzfrequenz zur Netzstützung;
- Überwachung aller Schaltvorgänge der kraftwerksweiten Schutzfunktionen (Abschaltung bei Über- oder Unterspannung);
- teilweise Umsetzung von kraftwerksweiten Schutzfunktionen wie das Abschalten von weiterbestehenden Kurzschlüssen (soweit dies nicht durch jeden einzelnen Wechselrichter auf Niederspannungsseite garantiert ist);
- Rückmeldung von Ist- und Sollwerten der Kraftwerksregelung an den Netzbetreiber über vielfältige Kommunikations- und Prozessleitschnittstellen;
- Rückmeldung einer Echtzeit-Ertragsprognose zur möglichen, momentanen Wirkleistungseinspeisung an den Netzbetreiber (zur Ermittlung des Ertragsausfalls bei Wirkleistungsbegrenzung);
- Einbindung aller Mess- und Regelungswerte sowie aller Parameter der Kraftwerksregelung in das kontinuierliche, kraftwerksweite Monitoring zur:
   o Rückmeldung des Status der Kraftwerksregelung
   o Funktions- und Fehlerüberprüfung der Kraftwerksregelung
   o automatische Fehlerbenachrichtigung bei Abweichung von eingestellten Normen der Kraftwerksregelung
   o Archivierung aller Vorgabeereignisse vom Netzbetreiber sowie der entsprechenden Steuer- und Regelvorgänge im Monitoring zum späteren Nachweis von Reaktionszeiten und Ertragsausfällen.

Im Folgenden wird die Erfindung anhand der Zeichnungen näher beschrieben, in denen zeigen:
Fig. 1 ein Blockschaltbild eines Systems zur Überwachung einer regenerativen Energieerzeugungsanlage.
Fig. 2 ein Blockschaltbild einer Kraftwerksregelung.

Die Zeichnungen dienen lediglich der Erläuterung der Erfindung und schränken diese nicht ein. Die Zeichnungen und die einzelnen Teile sind nicht notwendigerweise maßstäblich. Gleiche Bezugszeichen bezeichnen gleiche oder ähnliche Teile.

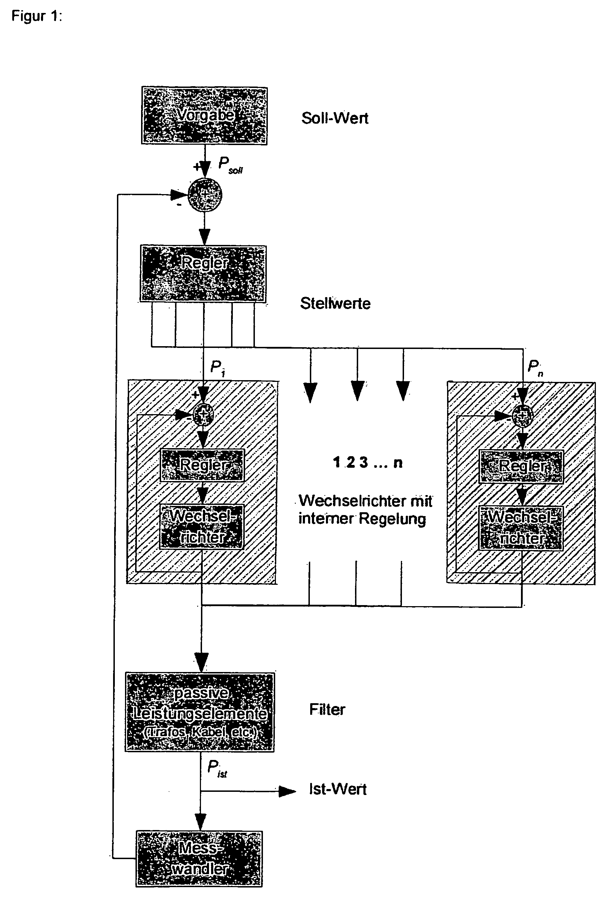

Figur 1 zeigt schematisch ein Blockschaltbild des Systems zur dynamischen Überwachung einer regenerativen Energieerzeugungsanlage. Die Energieerzeugungsanlage kann beispielsweise ein Solar-, Wind- oder Wasserkraftwerk sein. Die Energieerzeugungsanlage hat mehrere Energieerzeugungseinheiten in Form von Wechselrichtern. Diese Wechselrichter werden geregelt, um die Leistung (P, Q) und/oder elektrische Parameter (Verschiebungsfaktor, Leistungsfaktor, Netzfrequenz und/oder Netzspannung) am Ausgang oder Netzeinspeisungspunkt der Energieerzeugungsanlage auf bestimmte Vorgaben zu regeln. In einem ersten Schritt überwacht das System die regenerative Energieerzeugungsanlage und in einer zweiten Stufe regelt das System die Anlage.

Die Vorgaben können als einzelne Werte oder als gemeinsamer Vektor von einem übergeordneten System wie zum Beispiel einer Netzleitstelle an die Energieerzeugungsanlage übertragen werden oder von einem Steuerrechner der Energieerzeugungsanlage stammen. Die Vorgaben oder Soll-Werte können dynamisch oder statisch sein. Für die Blindleistung Q kann zum Beispiel ein fester Wert oder eine Abhängigkeit von der eingespeisten Wirkleistung oder von der Netzspannung vorgegeben werden. Eine Vorgabe auf einen fixen Wert oder eine Vorgabe auf eine bestimmte Absenkung oder Anhebung innerhalb einer bestimmten Zeit kann von der Regelung umgesetzt werden.

Die Vorgabe oder der Soll-Wert wird der Regelung, zum Beispiel einem PID-Regler, zugeführt. Ebenso wie ein Ist-Wert, der an einem Ausgang oder Netzverknüpfungspunkt der Energieerzeugungsanlage von einem Messwandler oder Messumsetzer gemessen wird. Der Regler steuert mehrere Wechselrichter an, die auch unterschiedlicher Bauart sein können. Dazu können eine oder mehrere Interfaceeinheiten vorgesehen sein, um die unterschiedlichen Protokolle oder Signalpegel der Wechselrichter zu bedienen. Die Interfaceeinheit kann in dem Regler integriert oder eine eigenständige Einheit sein.

Die Regelung kann Messwerte der Wechselrichter empfangen, um zum Beispiel deren Verfügbarkeit, Auslastung, Arbeitspunkt mit in die Regelung zu integrieren, um so Verluste zu minimieren. Weiterhin kann der Regler passive Leistungselemente wie Trafos, Leitungen usw. und die Topologie wie unterschiedliche Leitungslängen oder -beschaffenheiten bei der Regelung zu berücksichtigen, um Verluste zu minimieren.

Dieses System regelt das verteilte System von Energieerzeugungseinheiten, um so Verluste durch Mindereinspeisung oder nicht optimale Nutzung der Ressourcen der Energieerzeugungsanlage zu verhindern oder zu minimieren.

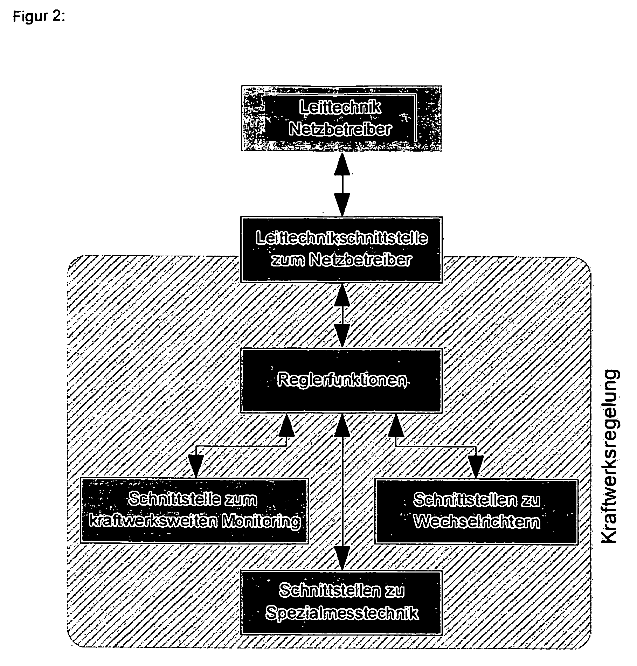

Figur 2 zeigt eine schematische Darstellung der Kraftwerksregelung, also gewissermaßen die Umgebung in die das System aus Figur 1 eingebettet ist. Beispielsweise eine Leitstelle des Netzbetreibers mit Leittechnik kommuniziert mit der Kraftwerksregelung, um Werte vorzugeben und Informationen und Messwerte über den Zustand des Kraftwerks zu erhalten. Dazu hat die Kraftwerksregelung eine Leittechnikschnittstelle. Die Kommunikation zwischen der Leittechnikschnittstelle und der Leittechnik des Netzbetreibers erfolgt über bekannte drahtgebundene oder drahtlose Kommunikationswege.

Die Leittechnikschnittstelle steht direkt oder indirekt mit den Reglerfunktionen der Kraftwerksregelung in Verbindung. Die Reglerfunktionen entsprechen dem inneren Teil der Regelschleife aus Figur 1, das heißt dem Regler und der Berücksichtigung der passiven Leitungselemente gemäß Figur 1. Die Reglerfunktionen haben eine oder mehrere bidirektionale Schnittstellen zu den Wechselrichtern, wie bereits in Figur 1 diskutiert.

Weiterhin haben die Reglerfunktionen eine oder mehrere bidirektionale Schnittstellen zum kraftwerksweiten Monitoring, um Informationen über den Zustand des gesamten Kraftwerks bei der Regelung zu erhalten und zu berücksichtigen. Andererseits können die Reglerfunktionen Werte und/oder Ergebnisse aus der Regelung an das kraftwerksweite Monitoring zur dortigen Verwendung ausgeben.

Die Reglerfunktionen haben eine oder mehrere bidirektionale Schnittstellen zu Spezialmesstechnik, um weitere Informationen in die Regelung einbeziehen zu können. Die Spezialmesstechnik kann zum Beispiel Messwandler umfassen, die den Netzeinspeisungspunkt überwachen. Die Spezialmesstechnik kann weitere Messwerte aus dem Kraftwerk sowie externe Daten, wie zum Beispiel Echtzeit-Einstrahlungsdaten, Temperatureinflüsse, Windmessdaten und Wetterprognosen für eine intelligente Regelung zur Verfügung stellen. Darüber hinaus kann die Spezialmesstechnik alle für die Regelung wichtigen oder wünschenswerten Messwerte, Zustände oder Vorgaben den Reglerfunktionen zur Verfügung stellen.

Als zusätzliche Eingangsdaten für die Regelung beziehungsweise die Reglerfunktionen kommen Energieprognosewerte sowohl für das Primärenergieangebot (Sonne, Wärme, Wind) wie auch für den Lastbedarf im Energienetz (Lastprofile) zum Einsatz. Diese Eingangsdaten können über Datenschnittstellen vom Energieversorger, Kraftwerksbetreiber oder einem externen Serviceanbieter bezogen werden und werden in der Anlage zur Regelung verwendet.

Des weiteren werden Energiespeicherkonzepte in die Kraftwerksregelung einbezogen. Dazu sind Datenschnittstellen zu Energiespeichersystemen wie zum Beispiel Schwungradmassenspeichern, Batteriesystemen, Druckluftspeichern, Pumpspeichern usw. vorgesehen. Ferner wertet das System Anforderungen des Energieversorgers oder Betreibers zur Bereitstellung von Energiemengen in kurz- und mittelfristigen Zeiträumen über Eingangsschnittstellen aus. Die Daten- und Eingangsschnittstellen können analog oder digital ausgeführt sein. Eine Rückmeldung der verfügbaren Energiemenge in den Speichern sowie eine intelligente Abschätzung der zu erwartenden Energiereserven im Prognosezeitraum an den Energieversorger, Kraftwerksbetreiber oder ein sonstiges übergeordnetes Steuersystem ist vorgesehen.

Das System regelt und überwacht auch kogenerative Systeme. Dies sind Mischanlagen von Erzeugungseinheiten mit unterschiedlichen Primärenergieträgern. Somit kann eine Komplettanlage mit zum Beispiel Photovoltaikwechselrichtern, Windturbinen, einem Batteriespeichersystem und einem Notstromaggregat auf Dieselbasis von einem zentralen Regler auf externe Anforderungen bezüglich Wirk- und Blindleistung, Frequenz- und Netzspannungsverhalten, etc. geregelt und überwacht werden.

## Patentansprüche

1. Kraftwerksregelung zur Regelung einer regenerativen Energieerzeugungsanlage mit mehreren Energieerzeugungseinheiten,
aufweisend
einen Signaleingang zum Empfang eines vorgegebenen Soll-Wertes,
eine Messvorrichtung zum Messen eines Ist-Wertes an einem Netzverknüpfungspunkt der Energieerzeugungsanlage,
eine Regelung zur Nachführung des Ist-Werts an den Soll-Wert durch Nachführung der einzelnen Energieerzeugungseinheiten, und
wobei die Kraftwerksregelung unterschiedliche Typen von Energieerzeugungseinheiten aufweist und wobei die Kraftwerksregelung ein oder mehrere Interfaceeinheiten für die unterschiedlichen Typen von Energieerzeugungseinheiten aufweist.

2. Kraftwerksregelung nach Anspruch 1, wobei Regelgrößen der Regelung die Wirkleistung, die Blindleistung, der Verschiebungsfaktor, der Leistungsfaktor, die Netzfrequenz und/oder die Netzspannung sind.

3. Kraftwerksregelung nach Anspruch 1 oder 2, wobei die Regelung zusätzlich Messwerte der Energieerzeugungseinheiten verarbeitet

4. Kraftwerksregelung nach einem der Ansprüche 1 bis 3, aufweisend Energieerzeugungseinheiten mit unterschiedlichen Primärenergieträgem

5. Kraftwerksregelung nach einem der Ansprüche 1 bis 4, wobei passive Elemente der Energieerzeugungsanlage bei der Regelung berücksichtigt sind.

6. Kraftwerksregelung nach einem der Ansprüche 1 bis 5, aufweisend ein Energiespeichersystem und Datenschnittstellen zu dem Energiespeichersystem.

7. Kraftwerksregelung nach einem der Ansprüche 1 bis 6, wobei der Soll-Wert als einzelner Wert oder gemeinsamer Vektor von einem Steuerrechner der Energieerzeugungsanlage stammt.

8. Regenerative Energieerzeugungsanlage mit mehreren Energieerzeugungseinheiten, aufweisend eine Kraftwerksregelung nach einem der Ansprüche 1 bis 7.

9. Regenerative Energieerzeugungsanlage nach Anspruch 8, wobei die Energieerzeugungseinheit ein Wechselrichter oder Gleichsteller ist.

10. Regenerative Energieerzeugungsanlage nach Anspruch 8 oder 9, aufweisend eine photovaltaische Energieerzeugungsanlage.

11. Verfahren zur Regelung einer regenerativen Energieerzeugungsanlage mit mehreren Energieerzeugungseinheiten, mit den folgenden Schritten:
- Empfangen eines Soll-Wertes,
- Messen eines Ist-Wertes an einem Netzverknüpfungspunkt der Energieerzeugungsanlage, und
- Regeln der einzelnen Energieerzeugungseinheiten zur Nachführung des Ist-Werts an den Soll-Wert,
wobei unterschiedliche Typen von Energieerzeugungseinheiten angesteuert werden und wobei ein oder mehrere Interfaceeinheiten für die unterschiedlichen Typen von Energieerzeugungseinheiten vorgesehen sind.

12. Verfahren zur Regelung nach Anspruch 11, wobei die aktuelle Verfügbarkeit und Auslastung aller Anlagenteile in die Berechnung der Regelung eingebunden wird.

13. Verfahren zur Regelung nach Anspruch 11 oder 12, wobei weitere Messwerte aus der Energieerzeugungsanlage und/oder externe Messwerte verarbeitet werden.

## Claims

1. A power plant control system for regulating a regenerative power generation aggregate having a plurality of power generation units,
comprised of:
-- a signal input for receiving a predetermined set-point value;
-- a measuring device for measuring the actual value at a network junction point of the power generation aggregate;
-- a control means for tracking the actual value with regard to the set-point value, by tracking the individual power generation units,
wherein the said power plant control system has [sic] a variety of types of power generation units, and wherein said power plant control system has one or more interface units for the different types of power generation units.

2. The power plant control system according to claim 1, wherein the regulated variables are active power, reactive power, displacement factor, power factor, mains frequency, and/or mains voltage.

3. The power plant control system according to claim 1 or 2, wherein the regulating system processes additional measured values of the power generation units.

4. The power plant control system according to one of claims 1-3, comprised of power generation units with different primary energy sources.

5. The power plant control system according to one of claims 1-4, wherein passive elements of the power generation aggregate are taken into account in the control.

6. The power plant control system according to one of claims 1-5, comprised of an energy storage system and data interfaces for the energy storage system.

7. The power plant control system according to one of claims 1-6, wherein the set-point value originates as an individual value or common vector from a control computer of the power generation aggregate.

8. A regenerative power generation aggregate having a plurality of power generation units, and having a power plant control system according to one of claims 1-7.

9. The regenerative power generation aggregate according to claim 8, wherein the power generation unit is [sic] an inverter [(for converting direct current to e.g. alternating current)] or a rectifier [(for converting (e.g.) alternating current, to direct current)].

10. The regenerative power generation aggregate according to claim 8 or 9, having a photovoltaic power generation means.

11. A method of controlling a regenerative power generation aggregate having a plurality of power generation units, comprised of the following steps:
-- receiving a set-point value;
-- measuring an actual value at a network junction point of the power generation aggregate; and
-- controlling the individual power generation units to achieve tracking of the actual value with regard to the set-point value;
wherein various types of power generation units are controlled, and wherein one or more interface units are provided for the various types of power generation units.

12. A control method according to claim 11, wherein the present availability and load of all parts of the aggregate are included in the calculation for the control.

13. A control method according to claim 11 or 12, wherein additional measured values from the power generation aggregate, and/or external measured values, are processed.

## Revendications

1. Régulation de centrale électrique pour la régulation d'une installation de production d'énergie renouvelable avec plusieurs unités de production d'énergie, présentant
une entrée de signal pour la réception d'une valeur de consigne prédéfinie,
un dispositif de mesure pour la mesure d'une valeur réelle à un point de connexion au réseau de l'installation de production d'énergie,
une régulation pour l'alignement de la valeur réelle sur la valeur de consigne par alignement des différentes unités de production d'énergie, et
dans laquelle la régulation de centrale électrique présente différents types d'unités de production d'énergie et dans laquelle la régulation de centrale électrique présente une ou plusieurs unités d'interface pour les différents types d'unités de production d'énergie.

2. Régulation de centrale électrique selon la revendication 1, dans laquelle des grandeurs de réglage de la régulation sont la puissance active, la puissance réactive, le facteur de décalage, le facteur de puissance, la fréquence de réseau et/ou la tension de réseau.

3. Régulation de centrale électrique selon la revendication 1 ou 2, dans laquelle la régulation traite en plus des valeurs de mesure des unités de production d'énergie.

4. Régulation de centrale électrique selon l'une quelconque des revendications 1 à 3, présentant des unités de production d'énergie avec différentes sources d'énergie primaire.

5. Régulation de centrale électrique selon l'une quelconque des revendications 1 à 4, dans laquelle des éléments passifs de l'installation de production d'énergie sont pris en compte lors de la régulation.

6. Régulation de centrale électrique selon l'une quelconque des revendications 1 à 5, présentant un système de stockage d'énergie et des interfaces de données avec le système de stockage d'énergie.

7. Régulation de centrale électrique selon l'une quelconque des revendications 1 à 6, dans laquelle la valeur de consigne comme valeur seule ou vecteur commun provient d'un ordinateur de commande de l'installation de production d'énergie.

8. Installation de production d'énergie renouvelable avec plusieurs unités de production d'énergie, présentant une régulation de centrale électrique selon l'une quelconque des revendications 1 à 7.

9. Installation de production d'énergie renouvelable selon la revendication 8, dans laquelle l'unité de production d'énergie est un onduleur ou un redresseur.

10. Installation de production d'énergie renouvelable selon la revendication 8 ou 9, présentant une installation de production d'énergie photovoltaïque.

11. Procédé de régulation d'une installation de production d'énergie renouvelable avec plusieurs unités de production d'énergie, avec les étapes suivantes :
- réception d'une valeur de consigne,
- mesure d'une valeur réelle à un point de connexion au réseau de l'installation de production d'énergie, et
- régulation des différentes unités de production d'énergie pour l'alignement de la valeur réelle sur la valeur de consigne,
dans lequel différents types d'unités de production d'énergie sont amorcés et dans lequel une ou plusieurs unités d'interface sont prévues pour les différents types d'unités de production d'énergie.

12. Procédé de régulation selon la revendication 11, dans lequel la disponibilité et le taux d'utilisation actuels de tous les éléments de l'installation sont intégrés dans le calcul de la régulation.

13. Procédé de régulation selon la revendication 11 ou 12, dans lequel d'autres valeurs de mesure de l'installation de production d'énergie et/ou valeurs de mesure externes sont traitées.
